# EUROPÄISCHE PATENTSCHRIFT

(11) **EP 2 825 796 B1**
(45) Veröffentlichungstag und Bekanntmachung des Hinweises auf die Patenterteilung: **11.10.2017**
(21) Anmeldenummer: 13703003.7
(22) Anmeldetag: 01.02.2013
(51) Int. Cl.: F16H 61/12, G01M 1/00

(54) **VERFAHREN ZUR VENTILÜBERWACHUNG UND GETRIEBESTEUERUNG ZUR DURCHFÜHRUNG DES VERFAHRENS**
METHOD FOR VALVE MONITORING AND TRANSMISSION CONTROL FOR CARRYING OUT THE METHOD
PROCÉDÉ POUR LA SURVEILLANCE DE SOUPAPES ET COMMANDE DE TRANSMISSION POUR LA MISE EN UVRE DU PROCÉDÉ

(30) Priorität: 14.03.2012 DE 102012203939
(43) Veröffentlichungstag der Anmeldung: 21.01.2015
(73) Patentinhaber: ZF Friedrichshafen AG, 88046 Friedrichshafen (DE)
(72) Erfinder: MAIER, Thomas, 92431 Neunburg v. Wald (DE)
(86) Internationale Anmeldenummer: PCT/EP2013/051995
(87) Internationale Veröffentlichungsnummer: WO 2013/135430

(56) Entgegenhaltungen:
- DE-A1- 10 204 183
- DE-A1-102010 001 989
- DE-C1- 10 114 374
- US-A1- 2008 176 709

## Beschreibung

Die vorliegende Erfindung betrifft ein Verfahren zur Ventilüberwachung gemäß dem Oberbegriff von Anspruch 1, insbesondere zur Anwendung in einem Kraftfahrzeuggetriebe. Des Weiteren betrifft die Erfindung eine Getriebesteuerung gemäß Anspruch 7 zur Durchführung eines solchen Verfahrens. Es ist bekannt, zu diagnostizieren, ob an den Ventilen einer Kraftfahrzeuggetriebesteuerung - insbesondere den Drucksteuerventilen, welche regelmäßig durch Magnetventile gebildet sind - tatsächlich der Strom fließt, welcher gemäß einer Soll-Stromvorgabe einzustellen ist. Dies muss redundant im System ermittelt werden.

Bisher erfolgt eine Diagnose bzw. Überwachung derart, dass für jedes Ventil der Duty Cycle zusammen mit der Temperatur des Getriebes und der Versorgungsspannung gemessen wird. Mithilfe eines Lastmodells wird dann aus diesen Messwerten softwaregestützt der resultierende Stromwert berechnet. Dieser per Software berechnete Stromwert wird hiernach für die Plausibilisierung des eingestellten Sollstromwertes verwendet. Aufgrund von hohen Toleranzen, i.e. der für das Modell verwendeten Werte wie zum Beispiel Temperatur, Spannung, ... als auch aufgrund von Ungenauigkeiten im Modell selbst, ist es schwierig, die Diagnoseanforderungen hinsichtlich Genauigkeit und Robustheit zu erfüllen. Zudem ist die Ermittlung eines genauen Modells sehr aufwändig und bedingt einen erheblichen Programmieraufwand hinsichtlich der Software. Schwankungen in der Betriebsspannung führen zu erheblicher Genauigkeitsverringerung bzw. Verringerung der Robustheit des Systems.

Aus US 2008/176709 A1, die alle Merkmale des Oberbegriffs des Anspruchs 1 offenbart, ist ein Verfahren zur Ventilüberwachung bekannt, wobei für jedes einer Mehrzahl von Ventilen ein Sollwert für dessen Ansteuerung vorgegeben wird, insbesondere je Ansteuerperiode. Ferner ist eine Getriebesteuerung mit einem Steuergerät sowie mehreren Ventilen offenbart, wobei das Steuergerät die Vorgänge in einem hydraulischen Kreislauf überwacht, um speziell einen darin auftauchenden Fehler zu erkennen. Ausgehend hiervon liegt der vorliegenden Erfindung die Aufgabe zugrunde, ein Verfahren zur Ventilüberwachung und eine Getriebesteuerung anzugeben, welche
diese Nachteile überwinden, und bei vorteilhaft geringem Aufwand eine verbessert ausfallsichere Ventilüberwachung ermöglichen.

Diese Aufgabe wird hinsichtlich des Verfahrens erfindungsgemäß durch die Merkmale des Anspruchs 1 gelöst. Hinsichtlich der Getriebesteuerung wird die Aufgabe erfindungsgemäß durch die Merkmale des Anspruchs 7 gelöst. Vorteilhafte Ausführungsformen und Weiterbildungen sind Gegenstand der Unteransprüche.

Vorgeschlagen wird erfindungsgemäß ein Verfahren zur Ventilüberwachung bzw. Ventildiagnose, insbesondere zur Ausführung mit einem Kraftfahrzeuggetriebe. Das Verfahren ist insbesondere zur Überwachung einer Mehrzahl elektrisch betätigter Magnetventile eines Getriebes vorgesehen, insbesondere von Drucksteuerventilen, welche zur Einnahme von Schaltstellungen des Getriebes geeignet bestromt werden können. In Abhängigkeit einer Bestromung derartiger Ventile kann ein Antreiben oder Festbremsen unterschiedlicher Schaltelemente und somit ein Gangwechsel im Getriebe, insbesondere einem Automatikgetriebe, bewirkt werden. Selbstverständlich ist das Verfahren jedoch nicht auf die Überwachung von Drucksteuerventilen beschränkt, sondern mit verschiedenen elektrisch betätigten Ventilen ausführbar.

Im Rahmen der vorliegenden Erfindung wird für jedes der Mehrzahl von Ventilen ein Sollwert für dessen Ansteuerung vorgegeben, insbesondere je Ansteuerperiode. Bevorzugt ist ein derartiger Sollwert ein Stromsollwert bzw. -vorgabewert, welcher den am jeweiligen Ventil einzustellenden Strom bezeichnet, korrespondierend zum Beispiel ein Tastgrad. Der jeweilige Sollwert kann einem Stromregler, insbesondere einer erfindungsgemäßen Getriebesteuerung, als Vorgabe zugeführt werden, welcher darauf basierend ein jeweiliges Ventil bestromt bzw. bestromen kann. Die Ansteuerung der Ventile erfolgt im Rahmen des erfindungsgemäßen Verfahrens bevorzugt mittels PWM-Signalen, insbesondere seitens des Stromreglers, wobei für eine jeweilige Ansteuerperiode bzw. PWM-Periode je Ventil je ein Sollwert vorgesehen ist.

Generiert werden kann ein jeweiliger Sollwert zum Beispiel bevorzugt durch eine Steuersoftware, welche in einer Getriebesteuerung bzw. einem Getriebesteuergerät hinterlegt sein kann.

Erfindungsgemäß ist vorgesehen, dass im Rahmen des Verfahrens für ein jeweiliges Ventil in einer Ansteuerperiode ein Ist-Betriebsparameter ermittelt wird. Ein Ist-Betriebsparameter ist bevorzugt ein Tastgrad bzw. Duty Cycle, woneben jedoch z.B. auch die Ermittlung eines Werts eines Summenstroms über die Periodendauer oder ein davon verschiedener Ist-Betriebsparameter denkbar ist. Die Ist-Betriebsparameter wenigstens zweier Ventile, für welche ein gleicher Sollwert für die Ansteuerperiode, vorgegeben ist, werden bei dem erfindungsgemäßen Verfahren in der Folge verglichen, wobei in Abhängigkeit des Vergleichsergebnisses entweder auf eine Fehlfunktion zumindest eines Ventils oder auf ordnungsgemäße Funktion erkannt wird.

Auf Fehlfunktionalität wird hierbei insbesondere erkannt, wenn zwischen den wenigstens zwei verglichenen Ist-Betriebsparametern im Zuge des Vergleichs Abweichungen festgestellt werden, welche einen Schwellwert bzw. eine Toleranz überschreiten.

Bevorzugt ist im Rahmen der vorliegenden Erfindung auch vorgesehen, korrespondierend mit einer Ansteuerperiode einen Ist-Betriebsparameter wenigstens eines Ventils mit einer Mehrzahl von Ist-Betriebsparametern weiterer Ventile zu vergleichen, welchen für die Ansteuerperiode ein gleicher Sollwert vorgegeben ist. Alternativ oder zusätzlich kann bevorzugt vorgesehen sein, insbesondere über mehrere Ansteuerperioden, eine Mehrzahl von Ist-Betriebsparametern wenigstens eines Ventils mit einer Mehrzahl von Ist-Betriebsparametern weiterer Ventile zu vergleichen. Basierend auf einer Mehrzahl erhaltener Vergleichsergebnisse kann hierbei mittels einer Logik ein defektes Ventil vorteilhaft auch identifiziert werden.

Die Identifizierung eines defekten Ventils kann hierbei innerhalb einer einzigen Ansteuerperiode erfolgen, wenn zumindest zwei weitere Ventile über den gleichen Sollwert wie das defekte Ventil angesteuert werden, i.e. zwei weitere Ist-Betriebsparameter zur Verfügung stehen. Um das defekte Ventil zu identifizieren kann der Ist-Betriebsparameter des defekten Ventils beispielsweise mit einem Ist-Parameter eines ordnungsgemäß funktionierenden Ventils verglichen werden als auch der Ist-Betriebsparameter des ordnungsgemäß funktionierenden Ventils mit jenem eines weiteren ordnungsgemäßen Ventils. Alternativ kann ein Ventil aus einem Paar von Ventilen, innerhalb welchem eine Fehlfunktionalität erkannt wurde, in einer weiteren Ansteuerperiode hinsichtlich seines Ist-Betriebsparameters mit einem Ist-Betriebsparameter eines dem Paar von Ventilen nicht angehörenden weiteren Ventils verglichen werden. Basierend auf den Vergleichsergebnissen kann hiernach je das defekte Ventil identifiziert werden kann, i.e. durch eine logische Operation, z.B. implementiert mit einer Wahrheitstabelle. Die entsprechende Logik mitsamt einem ggf. erforderlichen Zwischenspeicher kann in einem Getriebesteuergerät wie erfindungsgemäß vorgeschlagen bereitgestellt sein.

Das Verfahren eignet sich insbesondere zur Ausführung mit einer Mehrzahl von Ventilen, welche gleichartig, insbesondere baugleich bzw. unterschiedslos gebildet sind und insbesondere auch gleichen Betriebsbedingungen ausgesetzt sind, wie dies bei der vorgeschlagenen Getriebeanwendung vorteilhaft der Fall ist. Insbesondere im Kraftfahrzeuggetriebe, innerhalb welchem die Ventile gemeinsam auf einer Hydraulikschaltplatte angeordnet sein können, sind die Ventile denselben Umgebungseinflüssen ausgesetzt, insbesondere den gleichen Temperatur- und Spannungsschwankungen der Energieversorgung, z.B. über die Versorgungsbatterie. Hierdurch ändert sich deren Betriebsverhalten in Abhängigkeit derartiger Einflüsse in gleicher Weise, so dass Toleranzen bei der Diagnose bzw. Überwachung drastisch reduziert werden können.

Erfindungsgemäß ist das Verfahren zur kontinuierlichen bzw. iterativen Ausführung vorgesehen, i.e. über eine Vielzahl von Ansteuerperioden hinweg, insbesondere zur Durchführung mittels eines Getriebesteuergeräts.

Vorgeschlagen wird im Rahmen der vorliegenden Erfindung auch eine Getriebesteuerung bzw. Getriebesteuervorrichtung zur Durchführung des Verfahrens. Die Getriebesteuerung weist hierbei bevorzugt ein Steuergerät bzw. Getriebesteuergerät auf, insbesondere mit einem Stromregler. Über den Stromregler können die Ventile korrespondierend mit dem vorgegebenen Sollwert, welcher bevorzugt durch einen Mikrocontroller des Steuergeräts generiert wird, geeignet angesteuert werden, bevorzugt mittels eines PWM-Signals, welches durch den Stromregler sollwertbasiert erzeugt wird. Weiterhin ist das Getriebesteuergerät bevorzugt ausgebildet, während einer jeweiligen Ansteuerperiode, welche bevorzugt einer PWM-Periode entspricht, einen jeweiligen Ist-Betriebsparameter eines jeweiligen Ventils zu ermitteln. Eine Messfunktionalität und/oder Berechnungsfunktionalität kann hierzu in dem Stromregler und/oder dem Mikrocontroller des Steuergeräts abgebildet sein.

Bevorzugt ist die Getriebesteuerung eine elektro-hydraulische bzw. mechatronische Getriebesteuerung, insbesondere die Mehrzahl von Ventilen aufweisend, welche, wie vorstehend bereits erwähnt, bevorzugt auf einer Hydraulikschaltplatte der Getriebesteuerung angeordnet sein können. Die insbesondere elektrisch betätigbaren Ventile sind bevorzugt Drucksteuerventile, insbesondere gleicher Ausgestaltung.

Mittels der vorgeschlagenen Getriebesteuerung ist vorteilhaft ein Kraftfahrzeuggetriebe bildbar, insbesondere ein Automatikgetriebe, weiterhin insbesondere eines Automobils.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch vereinfacht eine Getriebesteuerung zur Ausführung des erfindungsgemäßen Verfahrens gemäß einer möglichen Ausführungsform der Erfindung;
- Fig. 2: exemplarisch und schematisch ein Ablaufdiagramm zur Darstellung des erfindungsgemäßen Verfahrens; und
- Fig. 3: exemplarisch und schematisch mögliche Fallvarianten im Zusammenhang mit der Erkennung eines Fehlerzustands und der Identifizierung eines defekten Ventils mittels der erfindungsgemäßen Ventilüberwachung.

In den nachfolgenden Figurenbeschreibungen sind gleiche Elemente bzw. Funktionen mit gleichen Bezugszeichen versehen.

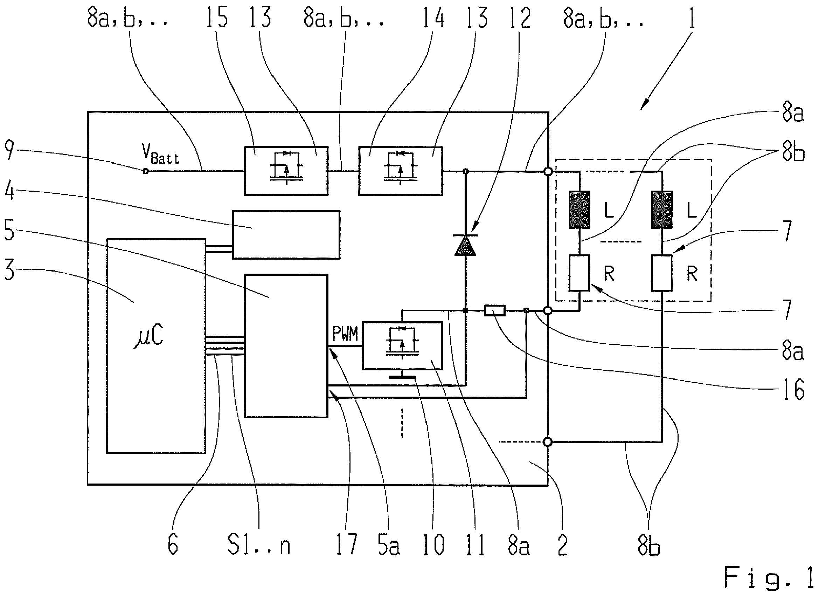

Fig. 1 zeigt exemplarisch und schematisch, insbesondere stark vereinfacht eine Getriebesteuervorrichtung bzw. Getriebesteuerung 1, welche zur Verwendung in einem Kraftfahrzeug, insbesondere einem Automobil vorgesehen ist. Die Getriebesteuerung 1, welche als elektro-hydraulische bzw. mechatronische Getriebesteuerung 1 gebildet ist, weist ein Steuergerät 2 auf, welches einen Mikrocontroller 3 sowie einen zugehörigen Speicher 4 umfasst, auf welchen der Mikrocontroller 3 zugreifen kann.

Der Microcontroller 3 ist mit einem Stromregler 5 des Steuergeräts 2 elektrisch verbunden, wozu eine Signal- bzw. Busleitung 6 vorgesehen ist. Über die Busleitung 6 werden dem Stromregler 5, welcher als ASIC gebildet ist, Steuervorgaben bzw. Sollwerte l_{S1...n} übermittelt, welche durch den Mikrocontroller 3 in Abhängigkeit einer einzunehmenden Schaltstellung eines Kraftfahrzeuggetriebes, für welches die Getriebesteuerung vorgesehen ist, generiert werden, insbesondere softwaregestützt.

Basierend auf den erzeugten Sollwerten, insbesondere Stromvorgaben, kann der Stromregler 5 Magnetventile 7 der Getriebesteuerung 1, insbesondere eine Mehrzahl von Drucksteuerventilen 7, entsprechend ansteuern bzw. bestromen. Hierbei wird für jedes Ventil 7 ein Sollwert l_{S1...n} erzeugt, i.e. für eine jeweilige Ansteuerperiode der Dauer T. Die Ventile 7, welche in Fig. 1 je als Reihenschaltung einer Induktivität L und eines ohmschen Widerstands R, i.e. in Form je ihres Ersatzschaltbildes dargestellt sind, sind an einer Hydraulikschaltplatte aufgenommen, nicht dargestellt, und einheitlich gebildet. Hierbei sind sie insbesondere auch gleichen Umgebungseinflüssen ausgesetzt.

Basierend auf den vorgegebenen Sollwerten l_{S1...n} erzeugt der Stromregler 5 pulsweitenmodulierte bzw. PWM-Signale je Ansteuerperiode für die Mehrzahl der Ventile 7, deren Tastgrad bzw. Duty Cycle je mit der einzustellenden Ventilstellung des mit dem jeweiligen PWM-Signal anzusteuernden Ventils 7 korrespondiert.

Zur Bestromung korrespondierend mit dem zur Ansteuerung erzeugten PWM-Signal ist ein Ventil 7 je in einem Strompfad 8a bzw. 8b bzw. 8c, ... angeordnet, welcher in Abhängigkeit des PWM-Signals selektiv unterbrechbar ist. Allgemein ist der Strompfad 8a bzw. 8b,... von einem Pol 9 eines ersten Potentials, z.B. einem Pluspol, zu einem Pol 10 eines zweiten Potentials, z.B. Masse, führend gebildet.

In einem jeweiligen Strompfad 8a, b, c, ... gemäß Fig. 1, welcher von einem Pluspol 9 einer Stromquelle, welche vorliegend durch eine Batterie bzw. Fahrzeugbatterie gebildet ist, V_{Batt}, über das jeweilige Magnetventil 7 nach Masse 10 führt, ist zur selektiven Unterbrechung je eine Treiberschaltung 11 mit einem Leistungstransistor vorgesehen, deren als Schalter wirkender Transistor selektiv über das PWM-Signal für das jeweilige Magnetventil 7 gesteuert wird, über einen jeweiligen Ausgang 5a ... des Stromreglers 5. Der Treiber 11 ist bevorzugt ein Low-Side-Treiber, LS-Treiber. Angemerkt sei hierbei, dass in Fig. 1 lediglich für ein Magnetventil 7 ein Treiber 11 dargestellt ist, daneben ist eine Mehrzahl weiterer Treiber 11 vorgesehen, z.B. für bis zu acht oder mehr Ventile 7.

Der Stromfluss über ein jeweiliges Magnetventil 7 in Abhängigkeit des Transistorschaltzustands eines Low-Side-Treibers 11 sei nachfolgend kurz erläutert.

Gesetzt den Fall, dass der Transistor in Abhängigkeit des PWM-Signals nicht durchgeschaltet ist, ist der Strompfad 8a bzw. 8b ... unterbrochen, so dass kein Strom nach Masse 10 abfließen kann, wobei das Magnetventil 7 seitens der Batterie 9 nicht bestromt wird.

Ist der Strompfad 8a bzw. 8b ... aufgrund des leitend geschalteten Transistors durchgängig, fließt ein Strom von der Stromquelle 9 durch das Magnetventil 7 über den Transistor der Treiberschaltung 11 nach Masse 10, d.h. das Magnetventil 7 wird bestromt. Die Dauer der Bestromung bzw. des Durchschaltens des Transistors wird wiederum durch den Tastgrad des PWM-Signals zur Ansteuerung des Transistors bestimmt.

Im Falle eines Umschaltens von einem Durchschaltzustand des Transistors in einen hochohmigen, nicht durchgeschalteten Zustand, d.h. mittels des Treibers 11, wird ein zuvor ermöglichter Stromfluss von der Batterie 9 nach Masse 10 nachfolgend verhindert. Überspannungen im Rahmen des hierbei bewirkten Abschaltens der induktiven Last des Magnetventils 7 werden in diesem Fall durch eine parallel zum jeweiligen Magnetventil 7 angeordnete Freilaufdiode 12 verhindert, welche nunmehr ein Zirkulieren des Stromes ermöglicht. Nach dem Umschalten wird das Magnetventil 7 im Sinne der vorliegenden Erfindung ebenfalls nicht bestromt.

Wie Fig. 1 weiterhin zu entnehmen ist, ist zur Darstellung einer erforderlichen Redundanz weiterhin eine Schutzvorrichtung 13 im Strompfad 8a, b... zu den Magnetventilen 7 vorgesehen, welche mittels eines High-Side-Treibers 14 und einem Reverse-Battery-Schutz 15 bzw. Verpolschutz gebildet ist. Der ebenfalls mittels einer Treiberschaltung und einem Leistungstransistor gebildete High-Side-Treiber 14, HS-Treiber, wird lediglich in einem Fehlerfall aktiviert, wobei der Strompfad 8a, b, ... für sämtliche Magnetventile 7 unterbrochen wird, z.B. falls ein oder mehrere LS-Treiber 11 ausfallen oder ein Kurzschluss auftritt, ansonsten verbleibt der HS-Treiber 14 im Durchschaltzustand.

Ersichtlich, s. Fig. 1, ist in den jeweiligen Strompfaden 8a, b, c,... zwischen Magnetventil 7 und dem LS-Treiber 11 ferner je ein niederohmiger Widerstand bzw. ein Shunt 16 zur Strommessung angeordnet, dessen Messanschlüsse mit einem Messeingang 17 des Steuergeräts 2, vorliegend gebildet im Stromregler 5, verbunden sind. Über den jeweiligen Shunt 16 wird der Strom über ein jeweiliges Magnetventil 7 für die Dauer der Ansteuerperiode erfasst und hieraus der jeweilige Tastgrad ermittelt, i.e. als Ist-Betriebsparameter. Die Ermittlung erfolgt durch den Stromregler 5 und/oder den Mikrocontroller 3, i.e. computerisiert.

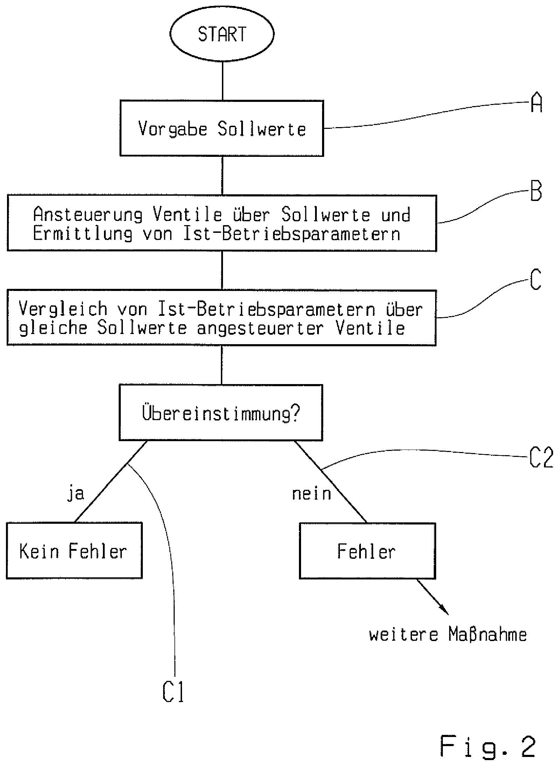

Anhand von Fig. 2 in Verbindung mit den vorstehenden Ausführungen wird nachfolgend das Verfahren zur Ventilüberwachung näher erläutert, welches mittels der vorstehend beschriebenen Getriebesteuerung 1 ausführbar ist.

Bei dem Verfahren zur Ventilüberwachung wird in einem ersten Schritt A für die Mehrzahl von Ventilen 7 je ein Sollwert l_{S1...n} für deren Ansteuerung mittels des Steuergeräts 2 vorgegeben, d.h. für eine jeweilige Ansteuerperiode. Die Sollwerte l_{S1...n} werden über die Leitung 6 an den Stromregler 5 übermittelt, welcher darauf basierend PWM-Signale zur Ansteuerung der Ventile 7 über die Ansteuerperiode erzeugt, welche mittels der erzeugten PWM-Signale, i.e. über die Low-Side-Treiber 11 nunmehr angesteuert bzw. bestromt werden. Mit anderen Worten steuert das Steuergerät 2 ein jeweiliges Ventil 7 in Abhängigkeit des sollwertbasierten PWM-Signals über die Dauer der Ansteuerperiode an, i.e. in einem zweiten Schritt B.

Während der Ansteuerperiode werden hierbei in dem zweiten Schritt B als Ist-Betriebsparameter jeweils die Tastgrade an den Ventilen 7 durch Messung der über dieselben fließenden Ströme über die Dauer der jeweiligen Ansteuerperiode ermittelt, i.e. mittels der jeweiligen mit den Shunts 16 gebildeten Messvorrichtungen, wobei ein Tastgrad durch das Verhältnis von Bestromung zu Nichtbestromung in einer Ansteuerperiode bestimmt wird, d.h. durch den Stromregler 5 und/oder den µController 3.

Die ermittelten Ist-Betriebsparameter werden bevorzugt in einem Speicher des Steuergeräts 2, z.B. dem Speicher 4, zur weiteren Verwendung im Rahmen eines Vergleichs zwischengespeichert. Für einen Vergleich, wie nachfolgend erläutert, werden auch Sollwert-Ventilkennungs-Datenpaare zumindest zwischengespeichert, wobei eine Kennung bzw. ID eines jeweiligen Ventils 7 zusammen mit dem Sollwert l_{S1...n} für das Ventil 7 für wenigstens eine Ansteuerperiode, insbesondere für eine Mehrzahl aufeinanderfolgender Ansteuerperioden gespeichert wird, z.B. in einer Look-up-Tabelle.

Mit Ermittlung der jeweiligen Ist-Betriebsparameter über die Ansteuerperiode werden in einem dritten Schritt C des erfindungsgemäßen Verfahrens wenigstens zwei Ist-Betriebsparameter miteinander verglichen, welche an Ventilen 7 ermittelt wurden, welche in der Ansteuerperiode über gleiche Sollwerte l_{S1...n} angesteuert wurden. Mittels der Datentabelle kann das Steuergerät 2 die Ventile 7 identifizieren, welche über gleiche Sollwerte l_{S1...n} bestromt werden und hiernach deren Ist-Betriebsparameter vergleichen.

Ergibt der Vergleich, dass Abweichungen zwischen den Ist-Betriebsparametern vorliegen, welche eine voreingestellte Toleranzschwelle überschreiten, Bezugszeichen C1, kann das Steuergerät 2 bzw. dessen Mikrocontroller 3 nachfolgend auf Fehler erkennen, i.e. wenigstens eines der verglichenen Ventile 7 funktioniert nicht ordnungsgemäß. Stimmen die Ist-Betriebsparameter innerhalb der zugestandenen Toleranz überein, Bezugszeichen C2, kann auf ordnungsgemäße Funktion der verglichenen Ventile 7 erkannt werden.

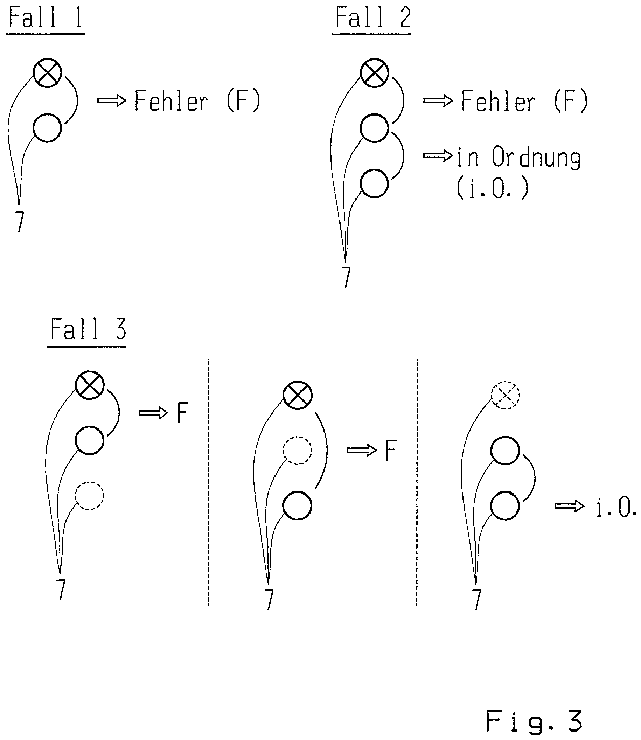

Mittels des erfindungsgemäßen Verfahrens ist es vorteilhaft auch ermöglicht, ein fehlerhaftes Ventil 7 zu identifizieren. Dies soll anhand von Fig. 3 beispielhaft näher erläutert werden.

In Fig. 3 ist zunächst ein erster Fall bzw. Fall 1 veranschaulicht, bei welchem lediglich zwei Ventile 7 in einer Ansteuerperiode hinsichtlich ihrer Ist-Betriebsparameter verglichen werden können, dargestellt durch das Klammersymbol. Das mit einem Kreuz markierte fehlerhafte Ventil 7 kann hierbei nicht eindeutig identifiziert werden, erkannt werden kann jedoch, i.e. aufgrund der Abweichungen in den Ist-Betriebsparametern, dass ein Fehler bei einem der verglichenen Ventile 7 vorliegt.

Ein weiterer, zweiter Fall in Fig. 3 veranschaulicht den Zustand, dass die Ist-Betriebsparameter dreier, alternativ auch mehrerer, Ventile 7 für eine Ansteuerperiode verglichen werden können, wobei wiederum ein Ventil 7 fehlerhaft arbeitet. Im Rahmen des Vergleichs eines ersten Ist-Betriebsparameterpaares, welchem sowohl der Ist-Betriebsparameter des defekten als auch des ordnungsgemäßen Ventils 7 angehört, kann zunächst auf Fehler eines der Ventile 7 des Paares erkannt werden. Bei einem Vergleich eines der Ist-Betriebsparameter des betrachteten Paares mit einem weiteren Ist-Betriebsparameter eines dem ursprünglich betrachteten Paar nicht angehörenden Ventils 7, kann durch eine entsprechende Logik, welche in dem Steuergerät 2 implementiert ist, das fehlerhafte Ventil 7 nunmehr basierend auf beiden Vergleichsergebnissen identifiziert werden.

Ähnliches gilt für den dritten Fall gemäß Fig. 3, in welchem die Identifizierung eines defekten Ventils 7 über wenigstens zwei Ansteuerperioden erfolgt. In der ersten Ansteuerperiode, Darstellung links, wird der Ist-Betriebsparameter des defekten Ventils 7 mit dem eines intakten Ventils 7 verglichen, wodurch das Vorliegen eines Fehlers erkannt wird, F. Mangels weiterer Vergleichsmöglichkeit kann das fehlerhafte Ventil 7 zunächst jedoch nicht identifiziert werden.

Das fehlerhafte Ventil 7 kann jedoch in einer nachfolgenden Ansteuerperiode, Darstellung mittig und rechts, identifiziert werden, wozu ein Vergleich eines Ist-Betriebsparameters eines der Ventile 7 aus dem verglichenen Ventilpaar mit jenem eines weiteren, dem ursprünglich verglichenen Ventilpaar nicht angehörenden Ventils 7 erforderlich ist. Aus den Ergebnissen beider Vergleiche kann nunmehr wiederum durch die Logik das defekte Ventil 7 identifiziert werden. Ein Vergleich der Ist-Betriebsparameter wenigstens zweier Ventile 7 kann wie erläutert je stattfinden, sobald die Ventile 7 für die Ansteuerperiode gleiche Sollwertvorgaben erfahren.

Für den Fall, dass ein Fehler erkannt wurde, können Notlaufmaßnahmen durch das Steuergerät 2 veranlasst werden, alternativ z.B. eine Warn- oder Fehlermeldung ausgegeben werden oder eine Abschaltung von zumindest Systemteilen erfolgen. Mittels des Verfahrens und der zu dessen Ausführung ausgebildeten Getriebesteuerung 1 ist neben einer Überwachung der Ventile 7 eine Identifizierung eines defekten Ventils 7 und somit vorteilhaft auch eine über die bloße Überwachung hinausgehende Ventildiagnose ermöglicht.

### Bezugszeichen

1 Getriebesteuerung
2 Steuergerät
3 µController
4 Speicher
5 Stromregler
5a Ausgang PWM
6 Leitung
7 Ventil
8a, b, ... Strompfad
9 Pol
10 Pol
11 LS-Treiber
12 Freilaufdiode
13 Schutzvorrichtung
14 HS-Treiber
15 Verpolschutz
16 Messshunt
17 Messeingang

## Patentansprüche

1. Verfahren zur Ventilüberwachung, insbesondere zur Ausführung mit einem Kraftfahrzeuggetriebe, wobei für jedes einer Mehrzahl von Ventilen (7) ein Sollwert (l_{S1...n}) für dessen Ansteuerung vorgegeben wird, insbesondere je Ansteuerperiode, **dadurch gekennzeichnet, dass** für ein jeweiliges Ventil (7) in einer Ansteuerperiode ein Ist-Betriebsparameter ermittelt wird, wobei die Ist-Betriebsparameter wenigstens zweier Ventile (7), für welche ein gleicher Sollwert (l_{S1...n}) für die Ansteuerperiode vorgegeben ist, verglichen werden, wobei in Abhängigkeit des Vergleichsergebnisses entweder auf Fehlfunktion zumindest eines Ventils (7) oder auf ordnungsgemäße Funktion der Ventile (7) erkannt wird.

2. Verfahren nach Anspruch 1, **dadurch gekennzeichnet, dass** als Sollwert (l_{S1...n}) je ein Stromwert vorgegeben wird.

3. Verfahren nach einem der vorhergehenden Ansprüche, **dadurch gekennzeichnet, dass** als Ist-Betriebsparameter je ein Tastgrad ermittelt wird.

4. Verfahren nach einem der vorhergehenden Ansprüche, **dadurch gekennzeichnet, dass** die Ventile (7) der Mehrzahl von Ventilen (7) einheitlich gebildet sind und/oder gleichen Betriebsbedingungen ausgesetzt sind.

5. Verfahren nach einem der vorhergehenden Ansprüche, **dadurch gekennzeichnet, dass** ein fehlerhaftes Ventil (7) anhand wenigstens zweier Vergleichsergebnisse jeweiliger Vergleiche von Ist-Betriebsparametern identifiziert wird, insbesondere mittels einer Logik.

6. Verfahren nach einem der vorhergehenden Ansprüche, **dadurch gekennzeichnet, dass** das Verfahren über eine Vielzahl von Ansteuerperioden hinweg iterativ durchgeführt wird.

7. Getriebesteuerung (1), welche ausgebildet ist ein Verfahren nach einem der Ansprüche 1 bis 6 durchzuführen, wobei die Getriebesteuerung (1) ein Steuergerät (2) mit einem Stromregler (5) sowie mehrere Ventile (7) aufweist, wobei der Stromregler (5) ausgebildet ist, die Ventile (7) korrespondierend mit einem vorgegebenen Sollwert anzusteuern, wobei das Steuergerät (2) einen Microcontroller aufweist, welcher ausgebildet ist diesen Sollwert zu erzeugen, und wobei das Steuergerät (2) ausgebildet ist, während einer Ansteuerperiode, einen jeweiligen Ist-Betriebsparameter eines jeweiligen Ventils (7) zu ermitteln.

8. Getriebesteuerung (1) nach Anspruch 7, **dadurch gekennzeichnet, dass** die Ventile (7) elektrisch betätigte Magnetventile, insbesondere elektrisch betätigte Drucksteuerventile sind, weiterhin insbesondere eines Kraftfahrzeuggetriebes.

9. Getriebesteuerung (1) nach einem der Ansprüche 7 und 8, **dadurch gekennzeichnet, dass** die Getriebesteuerung (1) eine elektro-hydraulische Getriebesteuerung (1) ist, insbesondere die Mehrzahl von Ventilen (7) aufweisend.

10. Kraftfahrzeuggetriebe, **gekennzeichnet durch** eine Getriebesteuerung (1) nach einem der Ansprüche 7 bis 9.

## Claims

1. Valve monitoring method, in particular for execution with a motor vehicle transmission, wherein for each of a multiplicity of valves (7) a target value (I_{S1...n}) is predefined for the actuation of said valve (7), in particular per actuation period, **characterized in that** an actual operating parameter is determined for a respective valve (7) in an actuation period, wherein the actual operating parameters of at least two valves (7) for which the same target value (I_{S1...n}) is predefined for the actuation period are compared, wherein depending on the comparison result either a malfunction of at least one valve (7) or satisfactory functioning of the valves (7) is detected.

2. Method according to Claim 1, **characterized in that** in each case a current value is predefined as a target value (I_{S1...n}).

3. Method according to one of the preceding claims, **characterized in that** in each case a duty cycle is determined as an actual operating parameter.

4. Method according to one of the preceding claims, **characterized in that** the valves (7) of the multiplicity of valves (7) are formed uniformly and/or are subjected to the same operating conditions.

5. Method according to one of the preceding claims, **characterized in that** a faulty valve (7) is identified on the basis of at least two comparison results of respective comparisons of actual operating parameters, in particular by means of a logic.

6. Method according to one of the preceding claims, **characterized in that** the method is carried out iteratively over a multiplicity of actuation periods.

7. Transmission controller (1) which is designed to carry out a method according to one of Claims 1 to 6, wherein the transmission controller (1) has a control device (2) with a power regulator (5) and a plurality of valves (7), wherein the power regulator (5) is designed to actuate the valves (7) correspondingly with a predefined target value, wherein the control device (2) has a microcontroller which is designed to generate this target value, and wherein the control device (2) is designed to determine a respective actual operating parameter of a respective valve (7) during an actuation period.

8. Transmission controller (1) according to Claim 7, **characterized in that** the valves (7) are electrically activated solenoid valves, in particular electrically activated pressure control valves, also, in particular, of a motor vehicle transmission.

9. Transmission controller (1) according to one of Claims 7 and 8, **characterized in that** the transmission controller (1) is an electro-hydraulic transmission controller (1), in particular having the multiplicity of valves (7).

10. Motor vehicle transmission, **characterized by** a transmission controller (1) according to one of Claims 7 to 9.

## Revendications

1. Procédé pour la surveillance de soupapes, destiné en particulier à être mis en oeuvre avec une transmission de véhicule automobile, dans lequel, pour chaque soupape d'une pluralité de soupapes (7), une valeur de consigne (I_{S1...n}) pour sa commande est prédéterminée, en particulier à chaque période de commande, **caractérisé en ce que**, pour une soupape (7) respective, un paramètre de fonctionnement réel est déterminé au cours d'une période de commande, dans lequel les paramètres de fonctionnement réels d'au moins deux soupapes (7) pour lesquelles une même valeur de consigne (I_{S1...n}) est prédéterminée pour la période de commande, sont comparés, dans lequel un défaut de fonctionnement d'au moins une soupape (7) ou un bon fonctionnement de la soupape (7) est détecté en fonction du résultat de la comparaison.

2. Procédé selon la revendication 1, **caractérisé en ce qu'**une valeur de courant est prédéterminée en tant que valeur de consigne (I_{S1...n}).

3. Procédé selon l'une quelconque des revendications précédentes, **caractérisé en ce qu'**un rapport cyclique respectif est déterminé en tant que paramètre de fonctionnement réel.

4. Procédé selon l'une quelconque des revendications précédentes, **caractérisé en ce que** les soupapes (7) de la pluralité de soupapes (7) sont réalisées de manière uniforme et/ou sont soumises aux mêmes conditions de fonctionnement.

5. Procédé selon l'une quelconque des revendications précédentes, **caractérisé en ce qu'**une soupape (7) défectueuse est identifiée sur la base d'au moins deux résultats de comparaison donnés par des comparaisons respectives de paramètres de fonctionnement réels, en particulier au moyen d'un système logique.

6. Procédé selon l'une quelconque des revendications précédentes, **caractérisé en ce que** le procédé est mis en oeuvre de manière itérative tout au long d'une pluralité de périodes de commande.

7. Commande de transmission (1), qui est conçue pour mettre en oeuvre un procédé selon l'une quelconque des revendications 1 à 6, dans laquelle la commande de transmission (1) comporte un appareil de commande (2) muni d'un régulateur de courant (5) et de plusieurs soupapes (7), dans laquelle le régulateur de courant (5) est conçu pour commander les soupapes (7) d'une manière qui correspond à une valeur de consigne prédéterminée, dans laquelle l'appareil de commande (2) comporte un microcontrôleur qui est conçu pour générer ladite valeur de consigne, et dans laquelle l'appareil de commande (2) est conçu pour déterminer, pendant une période de commande, un paramètre de fonctionnement réel respectif d'une soupape (7) respective.

8. Commande de transmission (1) selon la revendication 7, **caractérisée en ce que** les soupapes (7) sont des soupapes magnétiques actionnées électriquement, en particulier des soupapes de commande de pression actionnées électriquement, notamment d'une transmission de véhicule automobile.

9. Commande de transmission (1) selon l'une quelconque des revendications 7 et 8, **caractérisée en ce que** la commande de transmission (1) est une commande de transmission (1) électro-hydraulique, comportant en particulier la pluralité de soupapes (7).

10. Transmission de véhicule automobile, **caractérisée par** une commande de transmission (1) selon l'une quelconque des revendications 7 à 9.
